# EUROPÄISCHE PATENTSCHRIFT

(11) **EP 0 879 402 B1**
(45) Veröffentlichungstag und Bekanntmachung des Hinweises auf die Patenterteilung: **14.05.2003**
(21) Anmeldenummer: 97902325.6
(22) Anmeldetag: 05.02.1997
(51) Int. Cl.: G01K 1/08

(54) **SCHUTZKAPPE**
PROTECTIVE CAP
CAPUCHON DE PROTECTION

(30) Priorität: 06.02.1996 DE 19604201
(43) Veröffentlichungstag der Anmeldung: 25.11.1998
(73) Patentinhaber: Braun GmbH, Kronberg (DE)
(72) Erfinder: BEERWERTH, Frank, D-65594 Runkel (DE); HONNEFELLER, Katja, D-61381 Friedrichsdorf (DE); KRAUS, Bernhard, D-35619 Braunfels (DE)
(74) Vertreter: Bautz, Günther
(86) Internationale Anmeldenummer: EP9700504
(87) Internationale Veröffentlichungsnummer: WO97029349

(56) Entgegenhaltungen:
- EP-A- 0 419 100
- EP-A- 0 637 430
- EP-A- 0 674 162
- US-A- 3 581 570

## Beschreibung

Die vorliegende Erfindung betrifft eine Schutzkappe für ein Infrarot-Strahlungsthermometer nach dem Oberbegriff des Patentanspruchs 1.

Infrarot-Strahlungsthermometer werden zur Körpertemperaturmessung eingesetzt. Typischerweise weist ein solches Strahlungsthermometer ein Gehäuse mit einem Strahlungseintrittsfenster, einer inneren Optik und einem Infrarot-Sensor auf, der einer Auswerteeinheit zugeordnet ist. Das Strahlungseintrittsfenster dient dazu, das Innere des Gehäuses des Strahlungsthermometers abzuschließen und so die Optik und den Sensor vor Verschmutzung und Zerstörung zu schützen.

Als weiterer Schutz werden Schutzkappen der eingangs genannten Art auf das Ende des Thermometers aufgesetzt; solche Schutzkappen sind beispielsweise in der EP-B1-0 201 790, der US-A-5,179,936 oder der US-A-5,293,862 beschrieben. Diese Schutzkappen dienen nicht nur zum Schutz des die Infrarotstrahlung durchlassenden Fensters, sondern sollen den Benutzer auch vor einer Krankheitsübertragung schützen, indem vor einer Temperaturmessung oder vor einer Messung - und dies auch bei wechselnden Personen - jeweils eine neue Schutzkappe aufgesetzt wird. Das Wegwerf-Spekulum, wie es in der EP-B1-0 201 790, der US-A-5,179,936 oder der US-A-5,293,862 bezeichnet ist, wird über die Ohrkanalsonde eines Infrarotstrahlungsempfindlichen Mittelohr-Thermometers geschoben, wobei dieses Wegwerf-Spekulum eine infrarotdurchlässige Membran aufweist, die aus Polypropylen oder Polyethylen besteht. Das Teil, das die Membran trägt, ist ein spritzgegossenes Teil.

Zur Bestimmung der Körpertemperatur einer Person wird das vordere Ende der Temperaturmeßsonde in das Ohr eingeschoben. Die vom Trommelfell und von dem Ohrkanal emittierte Infrarotstrahlung tritt in das Thermometer über das Fenster ein und fällt über die Optik bzw. einen Lichtleiter und ein Interferenzfilter auf den Infrarot-Sensor. Die im Sensor hervorgerufene Temperaturerhöhung hat eine elektrische Ausgangsspannung zur Folge, aus der, über eine Auswerteeinheit, die Strahlungstemperatur bestimmt werden kann.

Es hat sich allerdings bei derartigen Geräten herausgestellt, daß durch den Kontakt des Ohrs mit der im allgemeinen kühleren Thermometeroptik während der Messung ein Temperaturgradient innerhalb der Thermometeroptik entsteht, aus dem üblicherweise ein Meßfehler resultiert. Weiterhin wird der Ohrkanal durch das Thermometer abgekühlt. Da vom Thermometer auch die Infrarotstrahlung des Ohrkanals oder einer anderen Körperhöhlung, in die das Strahlungsthermometer eingebracht wird, erfaßt wird, ergibt sich eine weitere Meßfehlerquelle.

Zur Vermeidung dieser Meßfehler ist in der EP 0 674 162 A2 eine wärmeisolierte Meßspitze beschrieben, die einen äußeren Schaft und eine Wärmesenke aufweist, zwischen denen sich ein isolierender Luftspalt befindet. Auf die Meßspitze kann eine Schutzkappe aufgesetzt werden.

Ausgehend von dem vorstehend angegebenen Stand der Technik und der damit verbundenen Probleme der möglicherweise auftretenden Meßfehler liegt der vorliegenden Erfindung die Aufgabe zugrunde, eine Schutzkappe zu schaffen, durch die zum einen der Benutzer eines solchen Infrarot-Fieberthermometers vor einer Krankheitsübertragung geschützt und auch die Thermometeroptik vor Verschmutzung bewahrt wird. Zum anderen sollen aber auch die bei herkömmlichen Fieberthermometern mit Schutzkappe auftretenden Meßfehler, wie sie vorstehend beschrieben sind, vermieden oder zumindest wesentlich reduziert werden.

Die vorstehende Aufgabe wird bei einer Schutzkappe der eingangs beschriebenen Art nach einer ersten Erfindung durch die kennzeichnenden Merkmale des Anspruchs 1 gelöst. Gerade der Bereich des Grundkörpers, der unmittelbar dem Fenster benachbart ist, der also in innigem Kontakt mit der Wand der Körperhöhlung, zum Beispiel des Ohrkanals, gelangt, wird derart durch zusätzliche Strukturen isoliert, daß die Wärmeübertragung in diesem Bereich in die Infrarotoptik verringert bzw. so gering gehalten wird, daß sie in Bezug auf eine Beeinflussung der Temperaturmessung vernachlässigbar ist. Da durch die Wärmeisolation der Schutzkappe der Wärmedurchgang außerhalb des Fensters verringert wird, wird auch gleichzeitig die Abkühlung, beispielsweise des Ohrkanals, herabgesetzt. Dies hat auch zur Folge, daß durch die verringerte Ohrabkühlung von dem Benutzer das Thermometer mit dieser Schutzkappe als wärmer und daher wesentlich angenehmer empfunden wird.

Weiterhin kann dieses wärmeisolierende Mittel weich ausgestaltet werden und ist im Ohr angenehmer als ein festes, unnachgiebiges Material bzw. eine damit umhüllte Schutzkappe. Ein weiterer Vorteil einer solchen Schutzkappe besteht insbesondere dann, wenn sie in Verbindung mit einem Fieberthermometer mit einer kleinen Meßspitze angewandt wird. Ein Fieberthermometer mit einer kleinen Meßspitze eignet sich sowohl
zur Temperaturmessung bei Erwachsenen als auch bei Kindern, indem diese Schutzkappe aus wärmeisolierendem Material in zumindest zwei Größen bereitgestellt wird. Eine solche Schutzkappe kann aber auch aus einem besonders weichen, wärmeisolierenden und damit nachgiebigen Material gefertigt werden, das sich sowohl bei Erwachsenen als auch bei Kindern an deren jeweiligen Ohrkanal, trotz der unterschiedlichen Größe, anpaßt. Derartige Schutzkappen nach der Erfindung werden als Einweg-Schutzkappe verwendet.

Um eine leichte und dennoch exakte Positionierung der Schutzkappe im Ohrkanal zu ermöglichen, um aber auch unterschiedliche Wärmeeinflüsse aufgrund unterschiedlicher Positionierungen zu vermeiden, sollte zumindest die mit dem Ohrkanal in Berührung kommende oder auch die gesamte Außenoberfläche des Grundkörpers außerhalb des Fensterbereiches mit den wärmeisolierenden Mitteln versehen werden. Mit einer solchen Ausgestaltung der Oberfläche der Schutzkappe wird in den unterschiedlichen Stellungen des Fieberthermometers stets eine ausreichende Wärmeisolierung gegenüber der Temperaturmeßsonde sichergestellt.

Eine weitere Möglichkeit, die Wärmeisolierung der Temperaturmeßsonde des Strahlungsthermometers zu erhöhen, besteht darin, daß der gesamte Grundkörper außerhalb des Fensters mit wärmeisolierenden Mitteln versehen ist, d.h. nicht nur dessen Außenseite, sondern auch dessen Innenseite. Mit einer solchen Maßnahme kann zum einen erreicht werden, daß die Dicke der Außenschicht auf dem Grundkörper aus wärmeisolierenden Mitteln nicht zu dick wird, zum anderen kann das wärmeisolierende Mittel auf der Innenseite so dimensioniert und in seiner Nachgiebigkeit eingestellt werden, daß damit gleichzeitig eine klemmende, aber dennoch lösbare, Halterung der Schutzkappe auf dem Ende des Strahlungsthermometers erreicht wird.

Der Grundkörper kann gleichzeitig als stabiler Träger für das wärmeisolierende Material dienen, das zumindest auf der Außenseite aufgebracht wird. Als wärmeisolierendes Mittel der zusätzlichen Struktur wird bevorzugt ein weicher, poröser Schaumstoff eingesetzt Durch die Merkmale des Anspruchs 2 wird die thermische Isolationswirkung noch verstärkt. Bevorzugt ist bei der Ausgestaltung der Schutzkappe in eine oder mehreren Luftkammern die Außenseite, die mit einer flexiblen Außenfolie überzogen ist. Eine solche Außenfolie bildet gleichzeitig eine glatte Außenoberfläche, die wenig Möglichkeit bietet, daß sich, auch während der Lagerung und Bevorratung der Schutzkappen, Verschmutzungen ansammeln und absetzen können.

Als flexible Außenfolie, die beispielsweise die Luftkammer bzw. die Luftkammern eines wärmeisolierenden Mittels begrenzt, wird Polypropylen (PP), Polyvinyl oder Polyethylen (PE) vorgeschlagen . Die vorstehenden Materialien sind zum einen kostengünstig, zum anderen sind sie leicht verarbeitbar, um die wärmeisolierenden Körper zu fertigen, und schließlich sind sie hautverträglich, was für den Anwendungsbereich der Fieberthermometer wesentlich ist.

Falls die zusätzlichen Sturkturen des wärmeisolierenden Mittels aus mehreren Luftkammern aufgebaut wird, kann es dienlich sein, diese durch
Stegteile, die sich radial zu der Achse des Grundkörpers erstrecken, zu unterteilen. Hierdurch wird zum einen eine ausreichende Flexibilität des wärmeisolierenden Mittels erzielt und dadurch dem Benutzer ein angenehmes Gefühl vermittelt, zum anderen wird dem wärmeisolierenden Mittel aber in alle Richtungen eine genügende Stabilität verliehen, damit die Luftkammern auch im zusammengedrückten Zustand eine für die Wärmeisolation ausreichende Abmessung behalten. Darüberhinaus können die Stegteile aus Schaumstoff gebildet werden , um die wärmeisolierenden Eigenschaften aufrechtzuerhalten und keine Wärmeübertragungsbrücken zu bilden. Die Stegteile können gegebenenfalls Unterbrechungen aufweisen, um jeweils benachbarte Luftkammem strömungsmäßig miteinander zu verbinden und damit die Nachgiebigkeit mit einem gewissen Dämpfungseffekt zu erhöhen.

Bevorzugt wird das Fenster des Strahlungsthermometers durch eine infrarote Strahlung durchlässige Fenster-Folie gebildet bzw. das eigentliche Fenster des Strahlungsthermometers durch eine solche Folie abgedeckt ; diese Fenster-Folie kann auch in einer Ausführungsform nahtlos in eine flexible Außenfolie des wärmeisolierenden Mittels, das den Grundkörper abdeckt, übergehen. Zur Stabilisierung der Schutzkappe kann eine Trageeinrichtung beispielsweise in Form eines ringförmigen Körpers eingesetzt werden, der beispielsweise auf den Rand des Grundkörpers aufsteckbar ist und die Folie glatt hält.

Nach den Merkmalen des Anspruchs 12 ergibt sich eine einfache Herstellung der Schutzkappe, da der Fensterbereich beim Aufbringen der zusätzlichen Strukturen nicht abgedeckt werden muß, sondern ebenfalls mit wärmeisolierendem Material versehen wird. Erst anschließend wird dann das Fenster durch Heißpressen, Heißprägen oder Kaltprägen geformt. Hierbei werden die Luftkammem und der Schaumstoff so gepreßt, daß nahezu klar durchsichtige Fenster entstehen.

Als bevorzugtes Material wird für den Grundkörper und das Fenster Polyethylen (PE) oder Polypropylen (PP) verwendet . Als bevorzugtes Material für die zusätzlichen Strukturen als wärmeisolierende Mittel in Form eines wärmeisolierenden Schaumstoffs wird z.B. Polyethylen (PE), Polyvinyl oder Polyurethan (PU) verwendet.

Die gestellte Aufgabe wird nach einer zweiten Erfindung durch die Merkmale des Anspruchs 16 gelöst. Hierbei ist die Schutzkappe nur aus wärmeisolierendem Material, wie Schaumstoff oder aus Kunststoffmaterial mit Luftkammern hergestellt. Hierbei wird dann das Fenster durch Heißprägen oder Kaltprägen auf die erforderliche Dicke und die für Infrarotstrahlung erforderliche Lichtdurchlässigkeit gebracht .

Weitere Einzelheiten und Merkmale der Erfindung ergeben sich aus der nachfolgenden Beschreibung von Ausführungsbeispielen anhand der Zeichnungen. In der Zeichnung zeigt:
- Fig. 1: eine Schnittansicht entlang der Achse einer Infrarotoptik eines Strahlungsthermometers mit einer darauf aufgesetzten, erfindungsgemäßen Schutzkappe, wobei das wärmeisolierende Mittel der Schutzkappe aus Schaumstoff gebildet ist,
- Fig. 2: eine weitere Schnittdarstellung einer Schutzkappe, bei der das wärmesolierende Mittel aus Schaumstoff nur im vorderen Bereich der Schutzkappe vorgesehen ist,
- Fig. 3: eine Schnittdarstellung einer Schutzkappe, bei der das wärmeisolierende Mittel durch Luftkammern gebildet ist,
- Fig. 4: Schnitt I-I durch die Schutzkappe nach Fig. 2 und
- Fig. 5 bis 7: verschiedene Schnittdarstellungen gemäß der Schnittführung II-II nach Fig. 3 quer zur Achse der Schutzkappe, anhand derer verschiedene innere Aufbauten der Schutzkappe bzw. der wärmeisolierenden Mittel dargestellt sind.

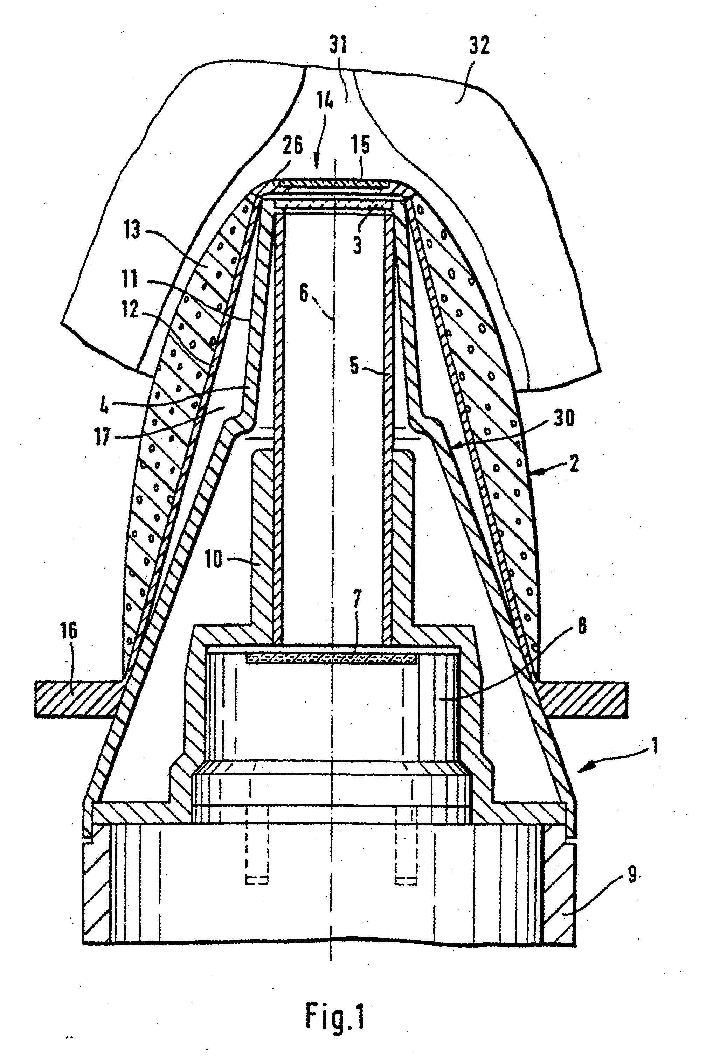

Auf das vordere Ende der Temperaturmeßsonde 30 eines Infrarot-Strahlungsthermometers 1, das als Fieberthermometer einsetzbar ist, wird, wie die Fig. 1 zeigt, eine Schutzkappe 2 aufgesteckt, um zum einen die Sonde 30 gegen Verschmutzung zu schützen und zum anderen eine Wärmeisolation zu bilden, wenn diese in eine Körperhöhle 31 eingeschoben wird. Die Körperhöhle 31 wird in Fig. 1 von einem Ohrkanal eines Ohres 32 einer Person dargestellt, das aber hier nur andeutungsweise gezeigt ist.

Um die Körpertemperatur einer Person zu messen, wird die Temperaturmeßsonde 30 in den Ohrkanal 31 des Ohres 32 eines Benutzers eingeführt. Bei einem Strahlungsthermometer ohne die Schutzkappe 2 tritt die vom Trommelfell (nicht dargestellt) und dem Ohrkanal 31 emittierte Infrarotstrahlung durch ein für infrarote Strahlung in dem relevanten Meßbereich durchlässiges Fenster 3 am vorderen Ende der Temperaturmeßsonde 30 ein und wird über einen Infrarot-Wellenleiter 5, der koaxial zu der Achse 6 der Temperaturmeßsonde 30 bzw. der aufgesetzten Schutzkappe 2 verläuft, auf ein Interferenzfilter 7 geführt und tritt in einen Infrarot-Sensor 8 ein. Die in dem Infrarot-Sensor 8 hervorgerufene Temperaturerhöhung hat eine elektrische Ausgangsspannung zur Folge, aus der die Strahlungstemperatur, über eine nicht näher dargestellte Auswerteeinheit, bestimmt und dem Benutzer, beispielsweise über eine digitale Anzeige (nicht dargestellt), die in dem nur andeutungsweise dargestellten Gehäuse 9 untergebracht ist, angezeigt. Wie in Fig. 1 zu sehen ist, sind der Wellenleiter 5 und der infrarot-Sensor 8 mit dem Filter 7 einerseits in einem Halter 10, der aus Metall gefertigt sein kann, und andererseits stirnseitig durch das auf das Gehäuse 9 aufgesteckte Rohr 4 der Temperaturmeßsonde 30 gehalten. Das Rohr 4 ist vorzugsweise aus Kunststoff gefertigt.

Das Rohr 4 verläuft zu seinem freien Ende, an dem das Fenster 3 integriert ist, leicht konisch mit einem stufenförmig abgesetzen, verjüngten Endbereich 11, der an seinem Ende dem Außendurchmesser des Infrarot-Wellenleiters 5 entspricht. Aufgrund dieses verjüngten Endbereichs 11 kann das Fieberthermometer sowohl bei Kindern, mit einem relativ engen Ohrkanal 31, als auch bei Erwachsenen, mit einem größeren Ohrkanal 31, angewandt werden.

Die aufgesteckte Schutzkappe 2, wie sie in Fig. 1 gezeigt ist, weist einen rohrförmigen, sich zu ihrem freien Ende hin konisch verjüngenden, dünnwandigen Grundkörper 12 auf, der aus einem Kunststoffmaterial gefertigt ist. Auf der Außenseite des Grundkörpers 12 ist bei diesem Ausführungsbeispiel ein Schaumstoff 13 als wärmeisolierendes Mittel aufgebracht. In einem zweiten Ausführungsbeispiel, das aber hier nicht dargestellt ist, besteht die Schutzkappe 2 nur aus Schaumstoff 13 oder aus einem wabenförmigen Luftkammergebilde.

An dem oberen, freien, stirnseitigen Ende 14 ist die Schutzkappe 2 mit einem Infrarot-Fenster 15 abgeschlossen, das aus einer dünnen, für Infrarotstrahlung in dem für die Temperaturmessung relevanten Strahlungsbereich durchlässigen Folie gebildet ist. In Fig. 1 bildet die Folie der Grundkörper 12 oder sie ist als gesondertes Teil am Grundkörper 12 befestigt, beispielsweise durch Weben. Bei der nur aus Schaumstoff bestehenden Schutzkappe ist die Folie des Fensters 15 durch Heißprägen oder Pressen aus dem Schaumstoff herausgeformt.

Da eine solche Folie 15 zum einen sehr dünn sein sollte, um die Messung durch eventuelle Eigenemissionen des Materials nicht zu beeinflussen, kann ein Problem dahingehend bestehen, eine solche Folie faltenfrei an das stirnseitige Ende 14 der Schutzkappe 2 zu befestigen. Hierzu ist in der dargestellten Ausführungsform ein Tragering 26 vorgesehen, der auch in der Ausführungsform der Fig.en 2 und 3 gezeigt ist, der auf die vordere Kante des Grundkörpers 12 aufgeklemmt wird oder einteilig mit der Schutzkappe 2 gespritzt ist. Der Tragering 26 kann dabei auch aus einem anderen, hochfesteren Material bestehen.

An dem unteren Ende endet nach Fig. 1 die Schutzkappe 2 mit einem ringförmigen Wulst 16, der sich klemmend oder klipsend an die Außenwand der Temperaturmeßsonde 30 anlegt und so auch die Schutzkappe 2 aussteift und zentriert. An der Innenseite des Wulstes 16 einerseits und/oder an der Außenseite des Rohres 4 andererseits können nicht dargestellte Vorsprünge und/oder Vertiefungen vorgesehen werden, so daß sich die Schutzkappe 2 im Bereich dieses Wulstes 16 an der Außenseite des Rohres 4 einhaken kann, um so einen sicheren Sitz der Schutzkappe 2 auf der Temperaturmeßsonde 30 zu gewährleisten. Der Wulst 16 dient gleichzeitig dazu, die Schutzkappe 2 besser zu handhaben, indem sie von Hand am Wulst 16 erfaßt wird und auf das vordere Ende der Temperaturmeßsonde 30 aufgesteckt wird; unter Ergreifen des ringförmigen Wulstes 16 kann die Schutzkappe 2 leicht von den Vorsprüngen oder Vertiefungen wieder gelöst werden.

Das wärmeisolierende Schaumstoff-Material 13 der Schutzkappe 2 gemäß Fig. 1 weist seine größte Wandstärke etwa in der Mitte zwischen dem stirnseitigen Ende 14 und dem ringförmigen Wulst 16 auf. Der Grundkörper 12 sollte zumindest in seinem oberen Bereich, der den verjüngten Endbereich 11 des Rohres 4 überdeckt, eine gewisse Flexibilität aufweisen, so daß er sich insbesondere beim Einsetzen in einen engen Ohrkanal, beispielsweise eines Kindes, derart zu der Achse 6 hin verformen kann, daß er sich nahezu an die Außenwand dieses Endbereichs 11 des Rohres 4 anlegen kann. Beim Einsetzen der Temperaturmeßsonde 30 dieses Thermometers 1 mit der Schutzkappe 2 in einen weiten Ohrkanal verbleibt der Grundkörper 12 annähernd in der in Fig. 1 gezeigten Stellung, wobei dann nur die Nachgiebigkeit des weichen Schaumstoff-Materials 13 und die Eindringtiefe der Temperaturmeßsonde 30 in den Ohrkanal 31 eine Anpassung an den Ohrkanal vornimmt.

Es besteht aber auch die Möglichkeit, Schutzkappen 2 so zu dimensionieren, daß deren Grundkörper 12 eine Außenform besitzt, wie sie durch das Rohr 4 vorgegeben ist. Solche Schutzkappen 2 mit einem derartigen verjüngten Ende können borzugsweise nur dann auf das Thermometer 1 aufgesetzt werden, wenn das Thermometer 1 für die Temperaturmessung von Kindern eingesetzt wird. In einem solchen Fall braucht dann kein Freiraum 17 zwischen der Außenseite des Endbereichs 11 des Rohres 4 und der Innenseite des Grundkörpers 12 vorhanden zu sein.

Aufgrund der wärmeisolierenden Eigenschaften des Schaumstoffes 13 wird eine Wärmeübertragung von dem auf Körpertemperatur befindlichen Ohrkanal 31 auf das in der Regel kühlere Rohr 4 verhindert, was ansonsten eine zu ungenaue Temperaturanzeige zur Folge haben könnte. Mit der wärmeisolierenden Schutzkappe 2 wird demzufolge, abgesehen von der Verhinderung der Verschmutzung des Fensters 3 und der Außenseite des Rohres 4, die Meßgenauigkeit des Thermometers 1 verbessert, also Fehlmessungen infolge einer Wärmeübertragung des Ohres 32 auf das Rohr 4 vermieden. Die Schutzkappe 2 sollte aus Hygienegründen nach jeder Messung ausgewechselt werden.

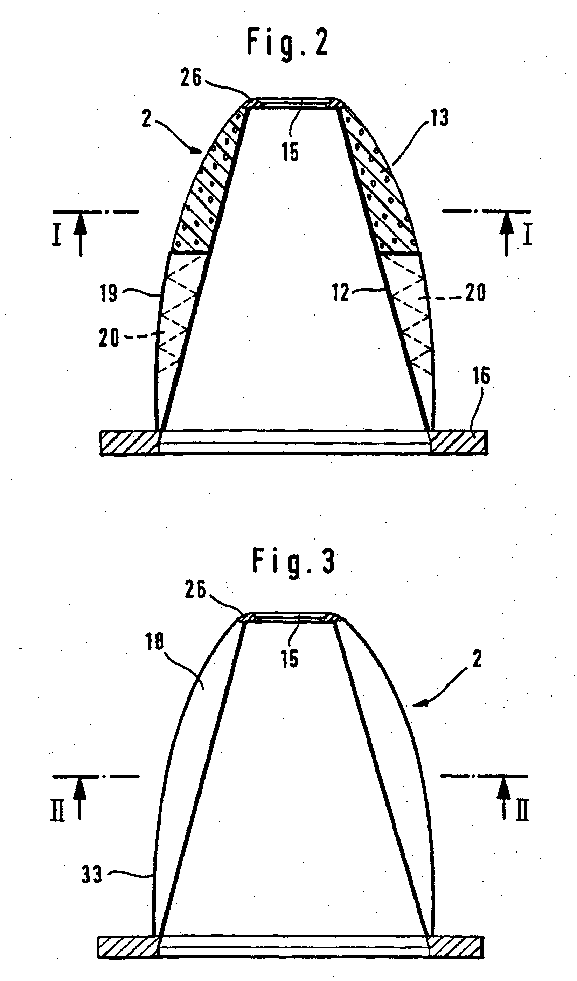

In Fig. 2 ist eine Ausführungsform der Schutzkappe 2 gezeigt, bei der das wärmeisolierende Mittel in Form des weichen, nachgiebigen Schaumstoffes 13 nur im vorderen, verjüngten Bereich vorgesehen ist, während die untere Hälfte des Grundkörpers 12, die mit dem ringförmigen Wulst 16 abschließt, unbeschichtet, also unbedeckt belassen ist. Die Aufbringung des wärmeisolierenden Materials nur an dem vorderen Ende des Grundkörpers 12 kann ausreichend sein, da die Schutzkappe 2 im wesentlichen mit ihrem vorderen Endbereich an einem Ohrkanal 31 zur Anlage gelangt. Es sollte darauf geachtet werden, daß die wärmeisolierenden Mittel einen wesentlichen Anteil an Luft enthalten. Hierzu kann ein großporiger Schaumstoff 13 eingesetzt werden, vorzugsweise ein Schaumstoff 13 mit geschlossenen Poren, so daß sich keine wesentlichen Verschmutzungen in dem Schaumstoff absetzen bzw. einlagern können.

Eine andere Möglichkeit, ein wärmeisolierendes Mittel auf der Außenseite des Grundkörpers 12 vorzusehen, das einen wesentlichen Anteil an Luft enthält, ist in Fig. 3 dargestellt. In dieser Ausführungsform der Schutzkappe 2, die im wesentlichen dieselbe Querschnittsform wie die Schutzkappe 2 der Fig. 1 besitzt, ist auf der Außenseite des Grundkörpers 12 eine Luftkammer 18 vorhanden, die von außen durch eine weitere Folie oder Wand 33 begrenzt ist. Die Nachgiebigkeit einer solchen Schutzkappe 2 kann zum einen über den Druck, mit dem die Kammer 18 mit Luft gefüllt wird, eingestellt werden, zum anderen aber durch die Nachgiebigkeit der Wand 33 und des Grundkörpers 12 selbst.

Die Schutzkappe 2 kann wärmeisolierende Mittel sowohl aus Schaumstoff-Material als auch in Form von anderweitigen Luftkammern haben. An die Außenkontur des Schaumstoffkörpers 13 schließt sich nach unten die Außenwand 19 einer Folie an, die mit dem Grundkörper 12 eine untere Luftkammer 20 bildet, so daß das wärmeisolierende Mittel im oberen Bereich der Schaumstoff 13 ist, während es im unteren Bereich durch eine oder mehrere (durch gestrichelte Linien dargestellt) Luftkammern 20 gebildet wird.

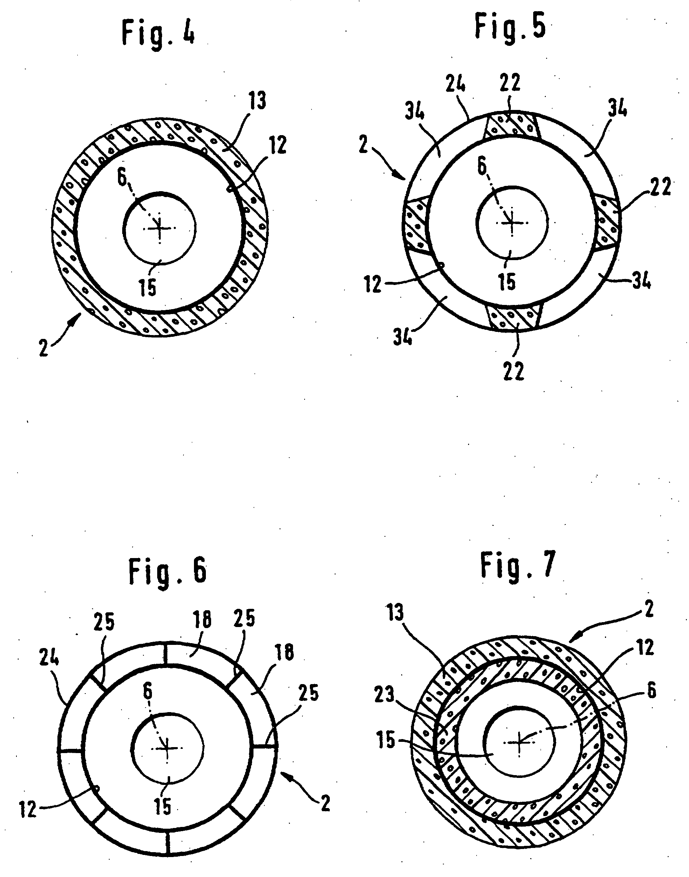

In den Figuren 5 bis 7 sind verschiedene Schnitte durch die Schutzkappen 2 schematisch dargestellt, die unterschiedliche Möglichkeiten des inneren Aufbaus sowohl in Form von Schaumstoff-Materialien als auch in Form von Luftkammern oder von Kombinationen aus beiden Maßnahmen als wärmeisolierende Mittel zeigen. Grundsätzlich kann, wie die Fig. 4 zeigt, das wärmeisolierende Mittel in Form eines geschlossenen, die Außenseite des Grundkörpers 12 bedeckenden Schaumstoffkörpers, entsprechend der Ausführungsform der Fig. 1 (durchgängig) und der Fig. 2 (nur im oberen Bereich), oder als umlaufende Luftkammer 18, entsprechend der Ausführungsform der Fig. 3, aufgebaut sein.

Es besteht aber auch die Möglichkeit, den Grundkörper 12 mit gleichmäßig um dessen Umfang verteilten Schaumstoff-Stegen 22 (Fig. 5) zu bedecken, die sich beim Einführen des Thermometers 1 in den Ohrkanal 31 zusammendrücken. Die Freiräume 34 zwischen den Stegen 22, von denen in der Ausführungsform der Fig. 5 vier vorgesehen sind, bilden dann in Verbindung mit dem Ohrkanal 31 (Fig. 1) einzelne Luftkammern 34. Die Stege 22 können aber auch aus Schaumstoffmaterial bestehen, das in seiner Festigkeit so ausgewählt ist, daß zum einen die Luftkammern 34 ausreichend ausgesteift werden, so daß sich die die Luftkammern 34 begrenzende Außenwand 24 nicht an den Grundkörper 12 anlegt, die aber dennoch weich und demzufolge nachgiebig genug sind, um ein für den Benutzer angenehmes Gefühl beim Einsetzen des Thermometers in den Ohrkanal zu vermitteln.

Eine weitere Ausführungsvariante ist in Fig. 6 dargestellt. Hierbei wird die Außenwand 24 durch dünne, membranartige Stege 25 mit dem Grundkörper 12 verbunden, die die Luftkammern 18 voneinander trennen. In Fig. 6 sind insgesamt acht Stege 25 vorgesehen, so daß um den Außenumfang des Grundkörpers 12 verteilt insgesamt acht voneinander getrennte Luftkammern 18 gebildet sind. Um den Tragekomfort noch zusätzlich zu erhöhen, können die Stege 25 nicht dargestellte Unterbrechungen aufweisen, so daß jeweils benachbarte Luftkammern 18 strömungsmäßig in Verbindung stehen, um einen Druckausgleich zwischen benachbarten Luftkammern 18 zu ermöglichen und damit eine bessere Anlage und Anpassung an den Ohrkanal 31 zu erzielen.

In Fig. 7 ist ein weiteres Ausführungsbeispiel dargestellt, bei dem zusätzlich zu der in den Figuren 1 und 2 dargestelten Schutzkappe 2 auf der Innenseite des Grundkörpers 12 ein weiteres wärmeisolierendes Mittel 23, beispielsweise ebenfalls Schaumstoff, aufgebracht ist.

Zusammenfassend werden mit den Schutzkappen, wie sie in den Figuren dargestellt sind, folgende Vorteile erzielt:
- Mit der Schutzkappe 2 wird ein störender Wärmeeintrag in ein Fieberthermometer verringert, wodurch die Meßgenauigkeit des Thermometers 1 verbessert wird bzw. eine kleinere (oder einfachere und kostengünstigere) Thermometeroptik mit verringerter Wärmeisolation und verringerter thermischer Masse möglich wird.
- Durch die Schutzkappe 2 wird die Abkühlung des Ohrkanals 31 während der Messung verringert, wodurch die Meßgenauigkeit des Thermometers 1 erhöht wird bzw. entsprechende Kompensationen entfalien können.
- Durch die verringerte Ohrabkühlung und die weiche, elastische Schutzkappe 2 ist die Messung für den Benutzer deutlich angenehmer, insbesondere für Kinder.
- Durch die auf ihrer Außenseite weiche Schutzkappe 2 wird das Verletzungsrisiko verkleinert.
- In Verbindung mit einem Fieberthermometer ermöglicht die beschriebene Schutzkappe 2 eine sehr schnelle Temperaturbestimmung bei Kindern und Erwachsenen gleichermaßen, ohne dabei Schmerzen zu verursachen. Durch ihre Verformbarkeit kann sich die Schutzkappe 2 unterschiedlichen Durchmessern von Ohrkanälen 31 anpassen und eine optimale Eindringtiefe und Zentrierung des Thermometers 1 im Ohrkanal 31 wird möglich.
- Auch die Verwendung von Schutzkappen 2 mit unterschiedlichen Außendurchmessern, beispielsweise für Kinder und Erwachsene, für das gleiche Thermometer 1 ist möglich.
- Durch den integrierbaren Tragering 26 kann das Fenster 3 bzw. die Fenster-Folie 15 der Schutzkappe 2 eine gleichmäßige, definierte Spannung erhalten, was eine gleichmäßige Transmission zur Folge hat. Eine eventuell undefinierte Spannung des Fensters 3 während des Aufsetzens der Schutzkappe 2 wird damit vermieden.

## Patentansprüche

1. Einweg-Schutzkappe (2) zum Aufsetzen auf eine in eine Körperhöhle (31) einbringbare Temperaturmeßsonde (30) eines Infrarot-Strahlungsthermometers (1), wobei die Einweg-Schutzkappe aus einem in seiner Form an die Körperhöhle (31) angepaßten Grundkörper (12) mit einem für infrarote Strahlung durchlässigen Fenster (15) besteht,
**dadurch gekennzeichnet,**
**daß** der Grundkörper (12) zumindest in Teilbereichen mit mindestens einer Luftkammer (18, 20) zur besseren Wärmeisolation zwischen Temperaturmeßsonde (30) und Körperhöhle (31) versehen ist.

2. Schutzkappe nach Anspruch 1,
**dadurch gekennzeichnet,**
**daß** der Grundkörper (12) aus Kunststoff hergestellt ist und daß die Luftkammern (18, 20) durch Schaumstoff (13) gebildet sind.

3. Schutzkappe nach Anspruch 1,
**dadurch gekennzeichnet,**
**daß** der Grundkörper aus Schaumstoff (13) besteht.

4. Schutzkappe nach Anspruch 1,
**dadurch gekennzeichnet**,
die Luftkammer(n) (18, 20) auf ihrer (ihren) der Körperhöhle zugekehrten Außenfläche(n) von einer flexiblen Folie begrenzt ist (sind).

5. Schutzkappe nach Anspruch 1,
**dadurch gekennzeichnet,**
**daß** die Luftkammer(n) (18, 20) auf ihrer Außenseite aus einer flexiblen Außenfolie aus Kunststoff, vorzugsweise aus Polypropylen (PP) oder Polyethylen (PE), begrenzt ist (sind).

6. Schutzkappe nach Anspruch 1, 4, oder 5,
**dadurch gekennzeichnet,**
**daß** die Luftkammer(n) (18, 20) durch Stegteile (22, 23; 25) unterteilt ist (sind).

7. Schutzkappe nach Anspruch 6,
**dadurch gekennzeichnet,**
**daß** die Stegteile (22, 23) aus Schaumstoff gebildet sind.

8. Schutzkappe nach einem der vorhergehenden Ansprüche,
**dadurch gekennzeichnet,**
**daß** das Fenster aus einer für infrarote Strahlung durchlässige Fenster-Folie (15) gebildet ist.

9. Schutzkappe nach Anspruch 8,
**dadurch gekennzeichnet,**
**daß** die Fenster-Folie (15) mittels einer Trage-Einrichtung (26) im Bereich des Fensters glatt gespannt ist.

10. Schutzkappe nach Anspruch 9,
**dadurch gekennzeichnet,**
**daß** die Trage-Einrichtung durch einen ringförmigen Körper (26) gebildet ist.

11. Schutzkappe nach Anspruch 10,
**dadurch gekennzeichnet,**
**daß** die Trage-Einrichtung (26) auf das durch das Fenster abgeschlossene Ende des rohrförmigen Grundkörpers (12) aufgeklemmt ist.

12. Schutzkappe nach Anspruch 1,
**dadurch gekennzeichnet,**
**daß** der gesamte Grundkörper (12) mit wärmeisolierenden Mitteln (13; 18, 20) versehen ist, und daß das Fenster durch Heißpressen oder Heißprägen auf die Dicke einer Folie reduziert ist, die infrarotdurchlässig ist.

13. Schutzkappe nach Anspruch 1,
**dadurch gekennzeichnet,**
**daß** der Grundkörper (12) aus Kunststoff, vorzugsweise Polyethylen (PE) oder Polypropylen (PP), gebildet ist.

14. Schutzkappe nach Anspruch 2,
**dadurch gekennzeichnet,**
**daß** der wärmeisolierende Schaumstoff (13) aus Kunststoff, vorzugsweise Polyethylen (PE), Polyvinyl oder Polyurethan (PU), gebildet ist.

15. Schutzkappe nach Anspruch 1,
**dadurch gekennzeichnet,**
**daß** der Grundkörper (12) der Schutzkappe (2) vor seiner Anbringung auf der Temperaturmeßsonde (30) in seiner Form noch nicht der Körperhöhle (31) angepaßt ist, und daß er aus einem derart dehnbaren Material besteht, daß er erst beim Aufziehen auf die Temperaturmeßsonde (30) in diese Form gestreckt wird.

16. Einweg-Schutzkappe (2) zum Aufsetzen auf eine in eine Körperhöhle (31) einbringbare Temperaturmeßsonde (30) eines Infrarot-Strahlungsthermometers (1), wobei die Einweg-Schutzkappe aus einem in seiner Form an die Körperhöhle (31) angepaßten Grundkörper (12) mit einem für infrarote Strahlung durchlässigen Fenster (15) besteht,
**dadurch gekennzeichnet,**
**daß** der Grundkörper (12) zumindest in Teilbereichen mit mindestens einer Luftkammer (18, 20) zur besseren Wärmeisolation zwischen Temperaturmeßsonde (30) und Körperhöhle (31) versehen ist, und daß das Fenster (15) in einem Verformungsvorgang auf die für infrarote Strahlung durchlässige Fensterdicke gebracht wird.

17. Schutzkappe nach Anspruch 16,
**dadurch gekennzeichnet,**
**daß** der Verformungsvorgang durch Heißpressen oder Heißprägen erfolgt.

## Claims

1. A disposable protective cap (2) adapted to be seated upon a temperature measurement probe (30) of an infrared radiation thermometer (1) introducible into a body cavity (31), said disposable protective cap being comprised of a base body (12) shaped to fit the body cavity (31) and having a window (15) transparent to infrared radiation,
**characterized in that** the base body (12) is provided with at least one air chamber (18, 20) at least in parts to improve heat insulation between the temperature measurement probe (30) and the body cavity (31).

2. The protective cap as claimed in claim 1,
**characterized in that** the base body (12) is fabricated from plastic material and that the air chambers (13; 18, 20) are formed of a foam material (13).

3. The protective cap as claimed in claim 1,
**characterized in that** the base body is comprised of foam material (13).

4. The protective cap as claimed in claim 1,
**characterized in that** the air chamber(s) (18, 20) has (have) its (their) outside(s) close to the body cavity bounded by a flexible film.

5. The protective cap as claimed in claim 1,
**characterized in that** the air chamber(s) (18, 20) has (have) its (their) outside(s) bounded by a flexible outer film fabricated from plastic, preferably polypropylene (PP) or polyethylene (PE).

6. The protective cap as claimed in claim 1, 4 or 5,
**characterized in that** the air chamber(s) (18, 20) is (are) subdivided by fin members (22, 23; 25).

7. The protective cap as claimed in claim 6,
**characterized in that** the fin members (22, 23) are formed of foam material.

8. The protective cap as claimed in any one of the preceding claims,
**characterized in that** the window is formed of a window film (15) transparent to infrared radiation.

9. The protective cap as claimed in claim 8,
**characterized in that** the window film (15) is stretched tight in the area of the window by means of a holding device (26).

10. The protective cap as claimed in claim 9,
**characterized in that** the holding device is formed by an annular body (26).

11. The protective cap as claimed in claim 10,
**characterized in that** the clamping device (26) is clamped upon the end of the tubular base body (12) closed by the window.

12. The protective cap as claimed in claim 1,
**characterized in that** the entire base body (12) is provided with thermal insulation (13; 18, 20), and that the window is reduced to the thickness of an infrared transmitting film by hot pressing or hot stamping.

13. The protective cap as claimed in claim 1,
**characterized in that** the base body (12) is formed of plastic material, preferably polyethylene (PE) or polypropylene (PP).

14. The protective cap as claimed in claim 2,
**characterized in that** the thermally insulating foam material (13) is made of plastic, preferably polyethylene (PE), polyvinyl or polyurethane (PU).

15. The protective cap as claimed in claim 1,
**characterized in that** the base body (12) of the protective cap (2), prior to being applied to the temperature measurement probe (30), is not as yet shaped to fit the body cavity (31) and that it is made of a material that is expandable such as to be stretched to this particular shape only when being fitted over the temperature measurement probe (30).

16. A disposable protective cap (2) adapted to be seated upon a temperature measurement probe (30) of an infrared radiation thermometer (1) introducible into a body cavity (31), said disposable protective cap being comprised of a base body (12) shaped to fit the body cavity (31) and having a window (3) transparent to infrared radiation,
**characterized in that** the base body (12) is provided with at least one air chamber (18, 20) at least in parts to improve heat insulation between the temperature measurement probe (30) and the body cavity (31), and that a forming operation is used to bring the window (3) to the thickness transmissive to infrared radiation.

17. The protective cap as claimed in claim 16,
**characterized in that** the forming operation is a hot pressing or hot stamping operation.

## Revendications

1. Capuchon de protection à jeter (2) destiné à être posé sur une sonde de mesure de température (30) d'un thermomètre à rayonnement infrarouge (1), laquelle peut être introduite dans une cavité corporelle (31), le capuchon de protection à jeter étant constitué par un corps de base (12) de forme adaptée à la cavité corporelle (31), avec une fenêtre laissant passer le rayonnement infrarouge, **caractérisé en ce que** le corps de base (12) est pourvu, au moins dans des régions partielles, d'au moins une chambre d'air (18, 20) pour réaliser une meilleure isolation thermique entre la sonde de mesure de température (30) et la cavité corporelle (31).

2. Capuchon de protection selon la revendication 1, **caractérisé en ce que** le corps de base (12) est fabriqué en matière plastique et **en ce que** les chambres d'air (18, 20) sont formées par de la mousse (13).

3. Capuchon de protection selon la revendication 1, **caractérisé en ce que** le corps de base est en mousse (13).

4. Capuchon de protection selon la revendication 1, **caractérisé en ce que** la/les chambre(s) d'air (18, 20) est/sont limitée(s) par une feuille flexible sur leur(s) surface(s) extérieure(s) tournée(s) vers la cavité corporelle.

5. Capuchon de protection selon la revendication 1, **caractérisé en ce que** la/les chambre(s) d'air (18, 20) est/sont limitée(s) sur leur(s) face(s) extérieure(s) par une feuille extérieure flexible en matière plastique, de préférence en polypropylène (PP) ou en polyéthylène (PE).

6. Capuchon de protection selon la revendication 1, 4, ou 5, **caractérisé en ce que** la/les chambre(s) d'air (18, 20) est/sont subdivisée(s) par des entretoises (22, 23 ; 25)

7. Capuchon de protection selon la revendication 6, **caractérisé en ce que** les entretoises (22, 23) sont réalisées en mousse.

8. Capuchon de protection selon l'une des revendications précédentes, **caractérisé en ce que** la fenêtre est formée par une feuille de fenêtre (15) perméable aux rayonnements infrarouges.

9. Capuchon de protection selon la revendication 8, **caractérisé en ce que** la feuille de fenêtre (14) est tendue de manière lisse dans la région de la fenêtre au moyen d'un dispositif de retenue (26).

10. Capuchon de protection selon la revendication 9, **caractérisé en ce que** le dispositif de retenue est formé par un corps de forme annulaire (26).

11. Capuchon de protection selon la revendication 10, **caractérisé en ce que** le dispositif de retenue (26) est serré sur l'extrémité, fermée par la fenêtre, du corps de base (12) tubulaire.

12. Capuchon de protection selon la revendication 1, **caractérisé en ce que** le corps de base (12) tout entier est pourvu de moyens thermo-isolants (13 ; 18, 20) et **en ce que** la fenêtre est réduite par pressage à chaud ou par estampage à chaud à l'épaisseur d'une feuille perméable aux infrarouges.

13. Capuchon de protection selon la revendication 1, **caractérisé en ce que** le corps de base (12) est réalisé en matière plastique, de préférence en polyéthylène (PE) ou en polypropylène (PP).

14. Capuchon de protection selon la revendication 2, **caractérisé en ce que** la mousse thermo-isolante est réalisée en matière plastique, de préférence en polyéthylène (PE), en polyvinyle ou en polyuréthanne (PU).

15. Capuchon de protection selon la revendication 1, **caractérisé en ce qu'**avant d'être posé sur la sonde de mesure de température (30), le corps de base (12) du capuchon de protection (2) n'est pas encore adapté de par sa forme à la cavité corporelle (31), et **en ce qu'**il est constitué par un matériau extensible de telle sorte qu'il n'est étiré dans cette forme que lorsqu'il est placé sur la sonde de mesure de température (30).

16. Capuchon de protection à jeter (2) destiné à être posé sur une sonde de mesure de température (30) d'un thermomètre de rayonnement infrarouge (1), laquelle peut être introduite dans une cavité corporelle (31), le capuchon de protection à jeter étant constitué par un corps de base (12) de forme adaptée à la cavité corporelle (31), avec une fenêtre laissant passer le rayonnement infrarouge, **caractérisé en ce que** le corps de base (12) est pourvu au moins dans des régions partielles, d'au moins une chambre d'air (18, 20) pour réaliser une meilleure isolation thermique entre la sonde de mesure de température (30) et la cavité corporelle (31), et **en ce que** la fenêtre (15) est amenée au cours d'une opération de déformation à l'épaisseur de fenêtre perméable aux rayonnements infrarouges.

17. Capuchon de protection selon la revendication 16, **caractérisé en ce que** l'opération de déformation a lieu par pressage à chaud ou par estampage à chaud.
